# EUROPEAN PATENT APPLICATION

(11) **EP 4 671 684 A1**
(43) Date of publication of application: **31.12.2025**
(21) Application number: 24184397.8
(22) Date of filing: 25.06.2024
(51) Int. Cl.: G01C 19/62

(54) **THREE-AXIS GYROSCOPE WITH ONLY ONE VAPOR CELL**

(71) Applicant: Q.ant GmbH, 70565 Stuttgart (DE)
(72) Inventor: Padniuk, Mikhail, 70599 Stuttgart (DE)
(74) Representative: DREISS Patentanwälte PartG mbB

(57) **Abstract**

The invention is based on the general idea that only one vapor cell (2) is used to determine a rotation of the gyroscope (1) in relation to three perpendicular axes (13, 14, 15). This allows a simultaneous and/or continuous measurement of the rotation rate around three perpendicular axes (13, 14, 15) of the gyroscope (1) with a minimized volume for installation and/or reduced manufacturing costs.

## Description

The present disclosure relates to a three-axis gyroscope, in particular a Nuclear Magnetic Resonance (NMR) gyroscope and/or a nuclear spin-based quantum gyroscope and/or a spin-exchange-pumped NMR gyroscope.

US 2023/0184553 A1 describes an atomic gyroscope system including a laser, a first sensor cell system, a second sensor cell system, and a third sensor cell system. The first sensor cell system is associated with determining rotation about an X-axis, the second sensor cell system is associated with determining rotation about a Y-axis, and while the third sensor cell system is associated with determining rotation about a Z-axis, with the X, Y, and Z axes being orthogonal with respect to each other. Moreover, one or more additional sensor cell systems can also be included. For example, an additional redundant sensor cell system can be provided for calibration or for error correction. As another example, the atomic gyroscope system can include three additional redundant sensor cell systems, one for each of the X, Y, and Z axes, to provide calibration or error correction.

Although such an atomic gyroscope system forms very accurate three-dimensional gyroscopes, it requires both a large volume for installation due to the number of cells and additional manufacturing costs.

The problem addressed by the present invention is to provide an improved or at least one alternative embodiment of a three-axis gyroscope, in particular providing a reduction in the number of required cells and/or the manufacturing costs.

This problem is solved according to the invention by the subject-matter of the independent claims. The dependent claims relate to advantageous embodiments.

The invention is based on the general idea that only one vapor cell is used to determine a rotation of the gyroscope in relation to three perpendicular axes. This allows a simultaneous and/or continuous measurement of the rotation rate around three perpendicular axes of the gyroscope with a minimized volume for installation and/or reduced manufacturing costs.

The gyroscope system according to the invention comprises only one vapor cell filled with a first alkali metal, a first noble gas and/or a second noble gas. In other words, the gyroscope system comprises a gas mixture within the one vapor cell, wherein this gas mixture comprises the first alkali metal, the first noble gas and/or the second noble gas. The first noble gas may be an isotope with a non-zero nuclear spin and/or the second noble gas may be an isotope with a non-zero nuclear spin. The vapor cell may be filled with the first alkali metal, a second alkali metal, the first noble gas and/or the second noble gas.

The gyroscope system comprises a first optical system configured to provide a circularly polarized light, in particular a circularly polarized laser light, propagating through the vapor cell as pump beam. Each alkali metal atom of the gas mixture in the vapor cell initially has a spin state/orientation which is random and/or unpolarized in the absence of the pump beam. Using optical pumping of the alkali metal vapor by the pump beam realigns the spins of the individual alkali metal atoms so that they are in a polarized state, with the spin axis of most of alkali metal atom being aligned along a propagation axis of the pump beam. The first noble gas and/or a second noble gas may be spin polarized via spin-exchange collisions with the optically polarized alkali-metal atoms. In addition, the gyroscope system comprises a second optical system configured to provide a linearly polarized light propagating through the vapor cell as probe beam.

The gyroscope system comprises a magnetic field system configured to provide a static magnetic field, a first oscillating magnetic field and a second oscillating magnetic field, wherein the first oscillating magnetic field has a frequency higher than the Larmor frequency of the first noble gas and/or second noble gas, while the second oscillating magnetic field has frequency range comprising the Larmor frequency of the first noble gas and/or second noble gas. The first oscillating magnetic field may be used as parametric modulation. The first oscillating magnetic field may have a frequency of 1 kHz and/or higher. The magnetic field system may be configured in such a way that the static magnetic field, a first oscillating magnetic field and a second oscillating magnetic field passes through the vapor cell.

In addition, the gyroscope system also comprises an optical polarization detection system which is configured to measure the polarization of the probe beam that has propagated through the vapor cell, in particular through the gas mixture comprising the first alkali metal, the first noble gas and/or the second noble gas, and to generate a polarization signal based on this measured probe beam. The generated polarization signal contains information about the atomic polarization state of the gas mixture inside the vapor cell through which the probe beam has propagated. Thus, the gyroscope system is configured to measure the atomic polarization state of the gas mixture via measurement of the optical polarization state of the probe beam.

Furthermore, the gyroscope system comprises a processing system configured to determine a rotation of the gyroscope system in relation to three axes based on the polarization signal, wherein these three axes being orthogonal with respect to each other. The generated polarization signal contains information about the atomic polarization state of the gas mixture inside the vapor cell through which the probe beam has propagated. Thus, the gyroscope system is configured to measure the atomic polarization state of the gas mixture via measurement of the optical polarization state of the probe beam.

This usage of the static magnetic field, the first oscillating magnetic field and the second oscillating magnetic field together with only one vapor cell allows the simultaneous and/or continuous measurement of the rotation rate around all three perpendicular axes of the gyroscope comprising. Consequently, the volume required to install the gyroscope is minimized and/or the manufacturing costs of the gyroscope are reduced. The measured rotation rate around all three perpendicular axes of the gyroscope may be used as a control signal to control a device. This control signal may be used to control the alignment and/or directional orientation of the device. This device may be a satellite and/or a vehicle, in particular a vehicle on ground, sea and/or in the air. Thus, the measured rotation information regarding the three axes may be used as a control signal to control an alignment and/or directional orientation of a satellite and/or a vehicle.

In an advantageous embodiment, the first optical system is configured such that the pump beam propagates along a pump axis and the second optical system is configured such that the probe beam propagates along a probe axis which is perpendicular to the pump axis. The magnetic field system is configured such that the static magnetic field is applied in a direction colinear with the pump axis and combined with the pump beam in such a way that the first alkali metal is operated in a spin exchange relaxation-free regime. The static magnetic field may be applied in the opposite direction of the spin polarization of the first alkali metal, the second alkali metal, the first noble gas and/or a second noble gas. Additionally, the magnetic field system is configured such that the first oscillating magnetic field is applied in a direction colinear with the pump axis while the second oscillating magnetic field is applied in a direction collinear with a further axis or the probe axis which is perpendicular to the pump axis. The pump axis, the probe axis and the further axis may be orthogonal with respect to each other. The further axis may be orthogonal to both the pump axis and the probe axis.

In an advantageous embodiment, the processing system comprises a first lock-in amplifier configured to demodulate the polarization signal at the first harmonic of the frequency of the first oscillating magnetic field to obtain information related to a rotation of the gyroscope system around the probe axis. Alternatively or additionally, the processing system comprises a second lock-in amplifier configured to demodulate the polarization signal at the second harmonic of the frequency of the first oscillating magnetic field to obtain information related to a rotation of the gyroscope system around the further axis, in particular the axis perpendicular to both probe and pump axes.

In an advantageous embodiment, the gyroscope system is configured to measure the Larmor frequencies of the gyromagnetic species, in particular of the first noble gas and/or of the second noble gas, in order to obtain information related to a rotation of the gyroscope system around the pump axis.

Alternatively or additionally, the processing system comprises a third lock-in amplifier and a fourth lock-in amplifier in order to obtain information related to a rotation of the gyroscope system around the pump axis. Alternatively or additionally, the processing system comprises a Phase-Locked Loop (PLL) unit and/or a Proportional-Integral-Derivative (PID) unit to obtain information related to a rotation of the gyroscope system around the pump axis.

The lockin amplifiers and/or PLL loops and/or PID loops may be used for the monitoring of the current larmor frequency of the gyromagnetic species, in particular of the first noble gas and/or of the second noble gas, in order to obtain information related to a rotation of the gyroscope system around the pump axis.

A lock-in amplifier, in particular the first lock-in amplifier, second lock-in amplifier, third lock-in amplifier and/or fourth lock-in amplifier, may be configured to amplify an input signal, in particular the polarization signal, at a reference frequency while filtering out noise and/or other unwanted signals.

In an advantageous embodiment, the third lock-in amplifier is configured to demodulate the polarization signal at the Larmor frequency of the first noble gas, while the fourth lock-in amplifier is configured to demodulate the polarization signal at the Larmor frequency of the second noble gas. Alternatively or additionally, the first and/or second lock-in amplifier is configured to generate an output signal, wherein the third lock-in amplifier is configured to demodulate the output signal of the first and/or second lock-in amplifier at the Larmor frequency of the first noble gas, while the fourth lock-in amplifier is configured to demodulate the output signal of the first and/or second lock-in amplifier at the Larmor frequency of the second noble gas.

In an advantageous embodiment, the third lock-in amplifier and the fourth lock-in amplifier are configured so that they each generate an output signal related to the measured Larmor frequency of the respective noble gas, wherein these output signals are used by the processing system to determine information related to a rotation of the gyroscope system around the pump axis.

In an advantageous embodiment, the processing system is configured to determine the information related to a rotation of the gyroscope system around the pump axis by comparing the measured Larmor frequencies of both noble gases with target values of the Larmor frequencies of both noble gases.

In an advantageous embodiment, the processing system is configured to use a relationship, in particular a difference and/or a ratio, between the measured Larmor frequencies of both noble gases and to compare this relationship with a theoretical relationship between the gyromagnetic ratios of both noble gases in order to obtain information related to a rotation of the gyroscope system around the pump axis.

In an advantageous embodiment, the first noble gas is a noble gas with non-zero nuclear spin, wherein the second noble gas is a noble gas with non-zero nuclear spin, wherein the first noble gas and second noble gas are different noble gases.

As all of the noble gases are exposed to the same leading and/or static magnetic field, the relationships between its Larmor frequencies, for example, the difference or ratio, may be predicted by the relationships between its gyromagnetic ratios. Hence, the comparison of the registered frequencies with the theoretical predictions based on the gyromagnetic ratios of the noble gases allows to estimate the anomaly phase difference between the observed spin precessions, which is a measure of the rotation rate around the axis colinear with the static magnetic field.

In an advantageous embodiment, the filling of the vapor cell comprises a second alkali metal, wherein the first alkali metal and the second alkali metal are different alkali metals. Alternatively or additionally, the first noble gas and the second noble gas are different noble gases which have different gyromagnetic ratios, wherein the circularly polarized light of the pump beam has a wavelength that corresponds to an atomic transition of the first alkali metal, wherein the linear polarized light of the probe beam has a wavelength that corresponds to an atomic transition of the second alkali metal, wherein the wavelength of the circularly polarized light of the pump beam and the wavelength of linearly polarized light of the probe beam are different.

In an advantageous embodiment, the first noble gas and second noble gas have different gyromagnetic ratios, in particular with different absolute values, and/or the first noble gas has positive gyromagnetic ratio, while the second noble gas has negative gyromagnetic ratio, and/or the number density of noble gases is higher than the number density of alkali metals, and/or the number density of noble gases in relation to the number density of alkali metals is in the range from 10³ to 10⁵. A number density of noble gases higher than the number density of alkali metals allows an operation of the gyroscope in a self-compensating regime, which allows suppression of the gyroscope sensitivity to the magnetic field drifts and/or noise.

In an advantageous embodiment, the first alkali metal is Rubidium or Potassium or Cesium, and/or the second alkali metal is Rubidium or Potassium or Cesium. Alternatively or additionally, the first noble gas is Helium or Neon or Xenon and/or the second noble gas is Helium or Neon or Xenon. Alternatively or additionally, the first noble gas and the second noble gas are two different Xenon isotopes.

In an advantageous embodiment, the first alkali metal is Rubidium, the second alkali metal is Potassium, the first noble gas is Helium, the second noble gas is Xenon.

In an advantageous embodiment, the circularly polarized light of the pump beam has a wavelength of 795 nm, and/or the linear polarized light of the probe beam has a wavelength of 770 nm. Alternatively or additionally, the linear polarized light of the probe beam and/or the circularly polarized light of the pump beam are continuous light. In an advantageous embodiment, the circularly polarized light of the pump beam has a power that is sufficient for the operation of the gyroscope system with respect to the size of the vapor cell and/or the linearly polarized light of the probe beam has a power that is sufficient for the operation of the gyroscope system with respect to the size of the vapor cell. In an advantageous embodiment, the circularly polarized light of the pump beam has a power of at least 10 mW, in particular at least 100 mW, and/or the linear polarized light of the probe beam has a power of at least 0.1 mW, in particular at least 1 mW.

In an advantageous embodiment, the vapor cell may be an atomic cell containing a Rb-K-3He-129Xe mixture of atomic vapors with a small amount of N2, wherein Rb is Rubidium, K is Potassium, He is Helium, Xe is Xenon and N is Nitrogen. The Rb-K mixture may be provided by an evaporation from a metallic droplet with a molar ratio of 1:100, wherein the concentration of the alkali-metal atoms may be steered with the temperature of the vapor cell. Hence, the vapor cell may be placed inside of a heating unit. The concentrations of both 3He and 129Xe may be equal to 5 amg. The pump beam may have a circularly polarized laser light resonant with a D1 line of Rb. The probe beam may have a linear polarized light resonant to the D1 line of K. The second oscillating magnetic field may have two harmonic components, one of which is resonant with the Larmor frequency of 3He and the second is resonant with Larmor frequency of 129Xe. The gyroscope system, in particular the vapor cell, may be enclosed inside of a magnetic shield in order to avoid environmental magnetic field perturbations.

Furthermore, the invention relates to a satellite comprising at least one gyro system according to the invention, which is described above and/or below.

Furthermore, the invention relates to a vehicle, in particular a vehicle on the ground, sea and/or in the air, comprising at least one gyroscope system according to the invention, which is described above and/or below. The vehicle may be a ground, land, sea and/or air vehicle or spacecraft. The vehicle may be an autonomous vehicle.

Further important features and advantages of the disclosure result from the dependent claims, from the drawings and from the associated description of the figures with reference to the drawings.

It goes without saying that the features mentioned above and those still to be explained in the following can be used not only in the respective specified combination, but also in other combinations or on their own, without departing from the scope of the present disclosure.

Preferred embodiments of the invention are shown in the drawings and are explained in more detail in the following description, whereby identical reference numerals refer to identical or similar or functionally identical components.

The disclosure will now be described with reference to the drawings wherein:
- Fig. 1: shows the gyroscope system according to the invention,
- Fig. 2: shows a three-dimensional partial view of the gyroscope system,
- Fig. 3: shows further details of the gyroscope system.

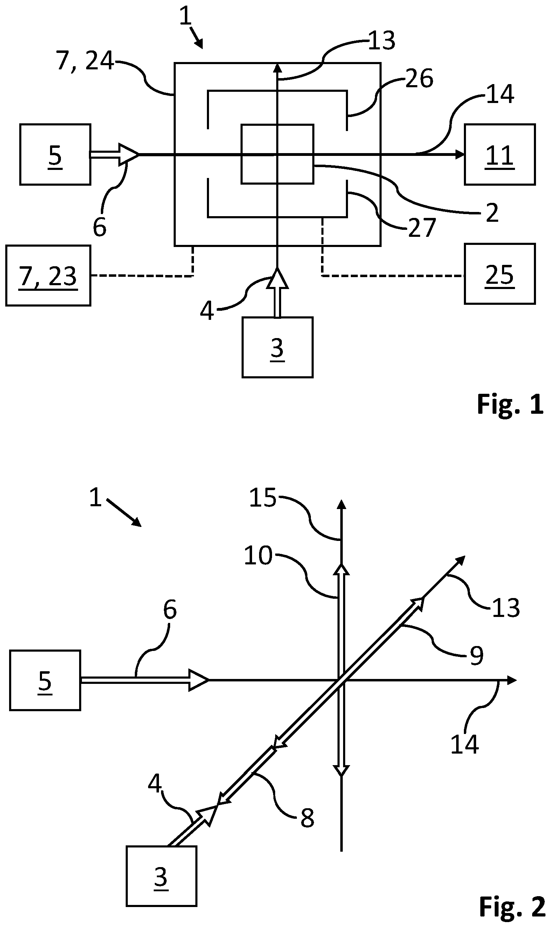

The Fig. 1 shows a gyroscope system 1 comprising only one vapor cell 2 filled with a first alkali metal, a second alkali metal, a first noble gas and/or a second noble gas.

A first optical system 3 of the gyroscope system 1 is configured to provide a circularly polarized light propagating through the vapor cell 2 as pump beam 4. This first optical system 3 is additionally configured such that the pump beam 4 propagates along a pump axis 13.

A second optical system 5 of the gyroscope system 1 is configured to provide a linear polarized light propagating through the vapor cell 2 as probe beam 6. This second optical system 5 is additionally configured such that the probe beam 6 propagates along a probe axis 14 which is perpendicular to the pump axis 13.

The gyroscope system 1 comprises a magnetic field system 7. This magnetic field system 7 may comprise a magnetic field control unit 23 and a system of magnetic field coils 24, wherein the magnetic field control unit 23 may be configured in such a way that the magnetic field coils 24 generate the required magnetic fields.

In addition, the gyroscope system 1 comprises a heating unit 26, 27 with a heating control unit 25. The heating may have a first part 26 of the heating unit and a second part 27 of the heating unit. The vapor cell 2 placed inside the heating unit 26, 27 and the heating control unit 25 may be configured in such a way that the concentration of the alkali-metal atoms inside the vapor cell 2 is steered with the temperature of the vapor cell 2.

The gyroscope system 1 comprises an optical polarization detection system 11 which is configured to measure the polarization of the probe beam 7 that has propagated through the vapor cell 2 and to generate a polarization signal based on it.

As indicated in the Fig. 2, the magnetic field system 7 is configured to provide a static magnetic field 8, a first oscillating magnetic field 9 and a second oscillating magnetic field 10. The first oscillating magnetic field 9 has a frequency higher than the Larmor frequency of the first noble gas and/or second noble gas, while the second oscillating magnetic field 10 has a frequency range comprising the Larmor frequency of the first noble gas and/or second noble gas.

The magnetic field system 7 is configured such that the static magnetic field 8 is applied in a direction colinear with the pump axis 13 and combined with the pump beam 4 in such a way that the first alkali metal is operated in a spin exchange relaxation-free regime. In addition, the magnetic field system 7 is also configured such that the first oscillating magnetic field 9 is applied in a direction colinear with the pump axis 13 while the second oscillating magnetic field 10 is applied in a direction collinear with a further axis 15, which is perpendicular to the pump axis 13. The pump axis 13, the probe axis 14 and the further axis 15 are orthogonal with respect to each other.

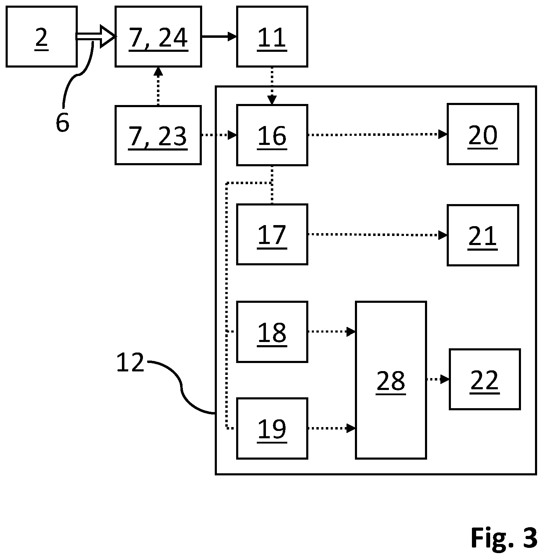

As shown in the Fig. 3, the gyroscope system 1 comprises a processing system 12 which is configured to determine information 20, 21, 22 related to a rotation of the gyroscope system 1 in relation to the three axes 13, 14, 15 based on the polarization signal.

The magnetic field control unit 23 of the magnetic field system 7 provides the processing system 12 with information, in particular technical data information, regarding the static magnetic field 8, the first oscillating magnetic field 9 and/or the second oscillating magnetic field 10. This information may comprise the frequency of the first oscillating magnetic field 9 and/or the second oscillating magnetic field 10.

The processing system 12 comprises a first lock-in amplifier 16 configured to demodulate the polarization signal at the first harmonic of the frequency of the first oscillating magnetic field 9 in order to obtain the information 20 related to a rotation of the gyroscope system 1 around the probe axis 14. Additionally, the processing system 12 comprises a second lock-in amplifier 17 which is configured to demodulate the polarization signal at the second harmonic of the frequency of the first oscillating magnetic field 9 to obtain the information 21 related to a rotation of the gyroscope system 1 around the further axis 15.

The processing system 12 comprises a third lock-in amplifier 18 and a fourth lock-in amplifier 19 in order to obtain information 22 related to a rotation of the gyroscope system 1 around the pump axis 13. The first and/or second lock-in amplifier 16, 17 is configured to generate an output signal, wherein the third lock-in amplifier 18 is configured to demodulate the output signal of the first and/or second lock-in amplifier 16, 17 at the Larmor frequency of the first noble gas, while the fourth lock-in amplifier 19 is configured to demodulate the output signal of the first and/or second lock-in amplifier 16, 17 at the Larmor frequency of the second noble gas. Alternatively or additionally, the third lock-in amplifier 18 may be configured to demodulate the polarization signal at the Larmor frequency of the first noble gas, while the fourth lock-in amplifier 19 may be configured to demodulate the polarization signal at the Larmor frequency of the second noble gas.

The third lock-in amplifier 18 and the fourth lock-in amplifier 19 are configured so that they each generate an output signal related to the measured Larmor frequency of the respective noble gas, wherein these output signals are used by the processing system 12, in particular by a frequency comparison unit 28 of the processing system 12, in order to determine information 22 related to a rotation of the gyroscope system 1 around the pump axis 13.

The processing system 12, in particular the frequency comparison unit 28, is configured to determine the information 22 related to a rotation of the gyroscope system 1 around the pump axis 13 by comparing the measured Larmor frequencies of both noble gases with target values of the Larmor frequencies of both noble gases.

The processing system 12, in particular the frequency comparison unit 28, is configured to use a relationship, in particular a difference and/or a ratio, between the measured Larmor frequencies of both noble gases and to compare this relationship with a theoretical relationship between the gyromagnetic ratios of both noble gas in order to obtain information 22 related to a rotation of the gyroscope system 1 around the pump axis 13.

The first noble gas is a noble gas with non-zero nuclear spin, wherein the second noble gas is a noble gas with non-zero nuclear spin, wherein the first noble gas and second noble gas are different noble gases. The first alkali metal and the second alkali metal are different alkali metals, wherein the first noble gas and the second noble gas are different noble gases which have different gyromagnetic ratios, wherein the circularly polarized light of the pump beam 4 has a wavelength that corresponds to an atomic transition of the first alkali metal, wherein the linear polarized light of the probe beam 6 has a wavelength that corresponds to an atomic transition of the second alkali metal, wherein the wavelength of the circularly polarized light of the pump beam 4 and the wavelength of linear polarized light of the probe beam 6 are different.

The first alkali metal is Rubidium or Potassium or Cesium, and/or the second alkali metal is Rubidium or Potassium or Cesium, and/or the first noble gas is Helium or Neon or Xenon, and/or the second noble gas is Helium or Neon or Xenon, and/or the first noble gas and the second noble gas are two different Xenon isotopes.

The measured rotation information 20, 21, 22 regarding the three axes 13, 14, 15 may be used as a control signal to control an alignment and/or directional orientation of a satellite and/or a vehicle.

### References Signs

- 1: gyroscope system
- 2: vapor cell
- 3: first optical system
- 4: pump beam
- 5: second optical system
- 6: probe beam
- 7: magnetic field system
- 8: static magnetic field
- 9: first oscillating magnetic field
- 10: second oscillating magnetic field
- 11: optical polarization detection system
- 12: processing system
- 13: pump axis
- 14: probe axis
- 15: further axis
- 16: first lock-in amplifier
- 17: second lock-in amplifier
- 18: third lock-in amplifier
- 19: fourth lock-in amplifier
- 20: information related to a rotation around the probe axis
- 21: information related to a rotation around the further axis
- 22: information related to a rotation around the pump axis
- 23: magnetic field control unit
- 24: system of magnetic field coils
- 25: heating control unit
- 26: first part of the heating unit
- 27: second part of the heating unit
- 28: frequency comparison unit

## Claims

1. A gyroscope system (1) comprising:
- only one vapor cell (2) filled with a first alkali metal, a first noble gas and/or a second noble gas;
- a first optical system (3) configured to provide a circularly polarized light propagating through the vapor cell (2) as pump beam (4);
- a second optical system (5) configured to provide a linear polarized light propagating through the vapor cell (2) as probe beam (6);
- a magnetic field system (7) configured to provide a static magnetic field (8), a first oscillating magnetic field (9) and a second oscillating magnetic field (10), wherein the first oscillating magnetic field (9) has a frequency higher than the Larmor frequency of the first noble gas and/or second noble gas, while the second oscillating magnetic field (10) has frequency range comprising the Larmor frequency of the first noble gas and/or second noble gas;
- an optical polarization detection system (11) configured to measure the polarization of the probe beam (7) that has propagated through the vapor cell (2) and to generate a polarization signal based on it;
- a processing system (12) configured to determine a rotation of the gyroscope system (1) in relation to three perpendicular axes (13, 14, 15) based on the polarization signal.

2. The gyroscope system (1) according to claim 1,
**characterized in that**
- the first optical system (3) is configured such that the pump beam (4) propagates along a pump axis (13), and
- the second optical system (5) is configured such that the probe beam (6) propagates along a probe axis (14) which is perpendicular to the pump axis (13), and
- the magnetic field system (7) is configured such that the static magnetic field (8) is applied in a direction colinear with the pump axis (13) and combined with the pump beam (4) in such way that the first alkali metal is operated in a spin exchange relaxation-free regime, and
- the magnetic field system (7) is configured such that the first oscillating magnetic field (9) is applied in a direction colinear with the pump axis (13) while the second oscillating magnetic field (10) is applied in a direction collinear with a further axis (15) or probe axis (14) which is perpendicular to the pump axis (13).

3. The gyroscope system (1) according to any one of the preceding claims,
**characterized in that**
- the processing system (12) comprises a first lock-in amplifier (16) configured to demodulate the polarization signal at the first harmonic of the frequency of the first oscillating magnetic field (9) to obtain information (20) related to a rotation of the gyroscope system (1) around the probe axis (14), and/or
- the processing system (12) comprises a second lock-in amplifier (17) configured to demodulate the polarization signal at the second harmonic of the frequency of the first oscillating magnetic field (9) to obtain information (21) related to a rotation of the gyroscope system (1) around the further axis (15).

4. The gyroscope system (1) according to any one of the preceding claims,
**characterized in that**
- the gyroscope system (1) is configured to measure the Larmor frequencies of the gyromagnetic species, in particular of the first noble gas and/or of the second noble gas, in order to obtain information related to a rotation of the gyroscope system (1), and/or
- the processing system (12) comprises a third lock-in amplifier (18) and a fourth lock-in amplifier (19) in order to obtain information (22) related to a rotation of the gyroscope system (1) around the pump axis (13), and/or
- the processing system (12) comprises a Phase-Locked-Loop unit and/or a Proportional-Integral-Derivative unit to obtain information related to a rotation of the gyroscope system (1) around the pump axis (13).

5. The gyroscope system (1) according to claim 4,
**characterized in that**
- the third lock-in amplifier (18) is configured to demodulate the polarization signal at the Larmor frequency of the first noble gas, while the fourth lock-in amplifier (19) is configured to demodulate the polarization signal at the Larmor frequency of the second noble gas, and/or
- that the first and/or second lock-in amplifier (16, 17) is configured to generate an output signal, wherein the third lock-in amplifier (18) is configured to demodulate the output signal of the first and/or second lock-in amplifier (16, 17) at the Larmor frequency of the first noble gas, while the fourth lock-in amplifier (19) is configured to demodulate the output signal of the first and/or second lock-in amplifier (16, 17) at the Larmor frequency of the second noble gas.

6. The gyroscope system (1) according to claim 5,
**characterized in that**
- the third lock-in amplifier (18) and the fourth lock-in amplifier (19) are configured so that they each generate an output signal related to the measured Larmor frequency of the respective noble gas,
- wherein these output signals are used by the processing system (12) to determine information (22) related to a rotation of the gyroscope system (1) around the pump axis (13).

7. The gyroscope system (1) according to claim 6,
**characterized in that**
the processing system (12) is configured to determine the information (22) related to a rotation of the gyroscope system (1) around the pump axis (13) by comparing the measured Larmor frequencies of both noble gases with target values of the Larmor frequencies of both noble gases.

8. The gyroscope system (1) according to claim 7,
**characterized in that**
the processing system (12) is configured to use a relationship, in particular a difference and/or a ratio, between the measured Larmor frequencies of both noble gases and to compare this relationship with a theoretical relationship between the gyromagnetic ratios of both noble gases in order to obtain information (22) related to a rotation of the gyroscope system (1) around the pump axis (13).

9. The gyroscope system (1) according to any one of the preceding claims, **characterized in that**
- the first noble gas is a noble gas with non-zero nuclear spin,
- wherein the second noble gas is a noble gas with non-zero nuclear spin.

10. The gyroscope system (1) according to any one of the preceding claims,
**characterized in that**
- the filling of the vapor cell (2) comprises a second alkali metal, and/or
- the first alkali metal and the second alkali metal are different alkali metals,
- wherein the first noble gas and the second noble gas are noble gases which have different gyromagnetic ratios,
- wherein the circularly polarized light of the pump beam (4) has a wavelength that corresponds to an atomic transition of the first alkali metal,
- wherein the linear polarized light of the probe beam (6) has a wavelength that corresponds to an atomic transition of the second alkali metal,
- wherein the wavelength of the circularly polarized light of the pump beam (4) and the wavelength of linear polarized light of the probe beam (6) are different.

11. The gyroscope system (1) according to any one of the preceding claims, **characterized in that**
- the first noble gas and second noble gas have different gyromagnetic ratios, and/or
- the first noble gas has positive gyromagnetic ratio, while the second noble gas has negative gyromagnetic ratio, and/or
- the number density of noble gas is higher than the number density of alkali metals, and/or
- the number density of noble gas in relation to the number density of alkali metals is in the range from 10³ to 10⁵.

12. The gyroscope system (1) according to any one of the preceding claims, **characterized in that**
- the first alkali metal is Rubidium or Potassium or Cesium, and/or
- the second alkali metal is Rubidium or Potassium or Cesium, and/or
- the first noble gas is Helium or Neon or Xenon, and/or
- the second noble gas is Helium or Neon or Xenon, and/or
- the first noble gas and the second noble gas are two different Xenon isotopes.

13. The gyroscope system (1) according to any one of the preceding claims, **characterized in that**
- the circularly polarized light of the pump beam (4) has a wavelength of 795 nm, and/or
- the linear polarized light of the probe beam (6) has a wavelength of 770 nm, and/or
- the linear polarized light of the probe beam (6) and the circularly polarized light of the pump beam (4) are continuous light.

14. A satellite comprising at least one gyroscope system (1) according to any one of the preceding claims.

15. A vehicle, in particular a ground, land, sea and/or air vehicle, and/or a spacecraft comprising at least one gyroscope system (1) according to any one of the preceding claims 1 to 13.
